# EUROPEAN PATENT SPECIFICATION

(11) **EP 1 578 166 B1**
(45) Date of publication and mention of the grant of the patent: **20.01.2010**
(21) Application number: 05397008.3
(22) Date of filing: 17.03.2005
(51) Int. Cl.: H04W 76/04, H04W 84/16

(54) **A method in a mobile phone exchange**
Verfahren in einer mobilen Vermittlungsanlage
Procédé dans un commutateur de téléphonie mobile

(30) Priority: 18.03.2004 FI 20045083
(43) Date of publication of application: 21.09.2005
(73) Proprietor: TeliaSonera Finland Oyj, 00510 Helsinki (FI)
(72) Inventor: Hälli, Rami, FI-02940, Espoo (FI); Aalto, Pertti, FI-04230, Kerava (FI)
(74) Representative: Rahkonen, Erkki Juhani

(56) References cited:
- WO-A-96/11551
- US-A- 5 841 854
- US-A1- 2002 128 023
- US-A1- 2002 132 638
- US-B1- 6 181 788
- US-B1- 6 633 636
- US-B1- 6 775 556

## Description

The invention relates to a method for transmitting phone calls according to the preamble of the appended claim 1. In addition, the invention relates to a phone system according to the preamble of claim 5. The invention also relates to a mobile phone exchange according to the preamble of the appended claim 9.

One main purpose of phone exchanges is to connect the phone calls coming into the phone exchange to the extensions of the phone exchange. The extensions can be so-called fixed line subscriptions or mobile phone subscriptions. In typical solutions the fixed line subscriptions are located in a sub-network subject to the phone exchange. Mobile phone subscriptions, in turn, are typically located in the network of some teleoperator. Partly because of the different network structures, the phone calls connected to different extension types can be controlled in different ways. In known solutions, different virtual numbers are utilized, through which the phone call to be transmitted is directed to, e.g. mobile phone subscriptions.

In typical phone exchanges a phone call to be connected to a fixed line subscription is connected to an extension, after which the phone exchange becomes free. If there is no answer in the extension within a set time, the phone call is re-directed to the phone exchange. Phone exchanges typically comprise a possibility to leave a phone call to be connected in a so-called queue if the extension is busy. Thus, the phone call is connected to the extensi on when the extension hangs up the previous call.

A phone call to be connected to a mobile phone network is connected to an extension, and status data is typically received within 7 to 10 seconds, and after this the phone exchange becomes free. After the transmission the phone call is within the network of the teleoperator controlling the mobile phone subscription, in which case in known solutions the further operations depend on the services provided by the operator. Typically, if the mobile phone subscription is busy or there is no answer, the call is disconnected or connected to an answering service.

One problem with the known solutions is that if the call is connected to a mobile phone subscription where there is no answer, the caller cannot return to the phone exchange otherwise than by calling the phone exchange again. This is especially difficult when the call could be directed to several alternative mobile phone numbers, such as, for example, connecting a call coming to the customer service of a company to one member of the customer service personnel.

US patent application publication 2002/0132638 discloses a mobile branch exchange system, which attempts to overcome these problems of known solutions. The system needs a voice pathway and a data pathway that is independent of the parallel voice pathway. Furthermore a mobile telephone used with the system must be technologically advanced.

It is an aim of the present invention to provide an improved method and system for connecting phone calls and a phone system. To attain this purpose, the method according to the invention is primarily characterized in what will be presented in the characterizing part of the independent claim 1. The phone system according to the invention is characterized in what will be presented in the characterizing part of the independent claim 5. The mobile phone exchange according to the invention is, in turn, characterized in what will be presented in the characterizing part of the independent claim 9.

The invention is based on the idea that a phone call connected via a phone exchange to a mobile communication network is identified as a phone call coming from the phone exchange. After the identification the phone call coming via the exchange is processed in the mobile phone service as an exchange call and special exchange properties are offered to it. This kind of exchange properties include, for example, queuing and redirecting a phone call back to the exchange if there is no answer.

In an advantageous embodiment of the invention, a call coming from the phone exchange is identified as an exchange call on the basis of a so-called A-number. The invention is implemented in an embodiment in the mobile phone exchange by program.

Considerable advantages are achieved by the present invention when compared to methods and systems of prior art. When applying the method according to the invention, substantially similar properties can be provided in connecting a phone call to an extension number independent of the subscription type of the extension number.

By means of an embodiment of the present invention the processing time of phone calls to be transmitted is decreased and thus the work of the switchboard operator is made more effective and the quality of service is improved.

An embodiment of the invention enables placing a phone call in a queue when the mobile phone intended to be reached is busy. In another embodiment the phone call is re-directed back to the phone exchange when the intended mobile phone is not answered.

By means of an embodiment of this invention the need for so-called virtual numbers is decreased in comparison to known phone call transmission solutions. In an embodiment of the invention, virtual numbers are unnecessary. The creation and maintenance of virtual numbers in systems related to service entities is laborious and prone to faults.

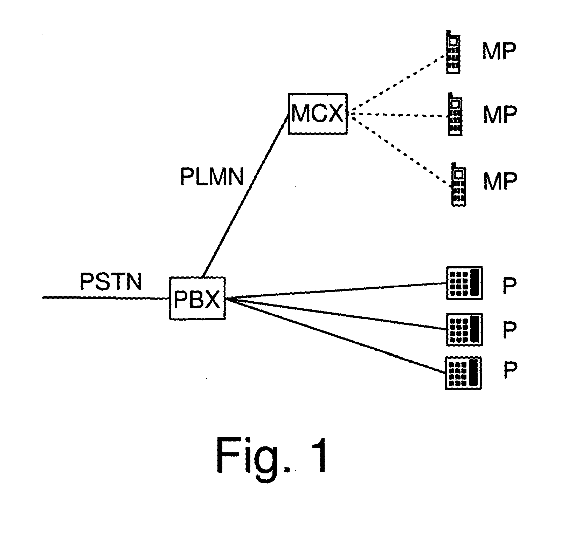

In the following, the invention will be described in more detail with reference to the appended drawing, in which
- Fig. 1: shows a phone system according to a preferred embodiment of the invention in a reduced chart.

Figure 1 shows a system complying with a preferred embodiment of the invention. The system comprises, e.g., teleterminals, such as phones P of a fixed telenetwork and mobile phones MP, a phone exchange PBX (private branch exchange), a data transfer network PSTN of a fixed telenetwork, a data transfer network PLMN of a mobile phone network, a mobile phone exchange MCX (mobile private branch exchange) of a mobile phone network.

Even though in Fig. 1 the system is shown as separate devices, their functionality can be advantageously implemented in integrated devices as well and in addition, they can comprise other functions. Advantageously the phone exchange PBX comprises data transfer means, e.g. in order to communicate with the data transfer network, and in addition it comprises means for storing data in one or more databases and for retrieving data from one or more databases.

In an advantageous embodiment the mobile phone exchange MCX of the mobile phone network comprises data transfer means, e.g. for communicating with a data transfer network, and in addition it comprises means for storing data in a database and for retrieving data from a database. The database of the mobile phone exchange MCX can be implemented in a mobile phone exchange or the database can be separate. The database can, in addition, consist of more than one databases. The mobile phone exchange MCX can function with more than one phone exchanges PBX. Advantageously, according to the invention, one mobile phone exchange MCX is used to control the mobile phone network of a relatively wide geographical area, such as one country or the telenetwork of one service provider.

Next, the operation of the above-described system in a certain case will be described. When a phone call comes to a phone exchange PBX, the phone exchange determines the extension where the call is desired to be connected to in a normal manner. If the extension is a mobile communication device, a connection is formed between the phone exchange PBX and the mobile phone exchange MCX. The mobile phone exchange MCX advantageously identifies from the A-number that the phone call is coming from the phone exchange PBX (i.e. the call is an exchange call). Thus, special transmission properties are used in connection with the call in question.

After the identification the mobile phone exchange MCX takes over the call and releases the switchboard operator. The mobile phone exchange MCX creates a connection to the mobile phone MP. When the mobile phone MP answers, the desired phone connection is created.

If an earlier connection has already been created to the mobile phone MP, the phone call remains in a queue in order to wait for the previous call (or calls) to end and the mobile phone to become free. When the mobile phone MP becomes free, the desired phone connection is created. In an embodiment the mobile phone exchange MCX sends information to the phone exchange PBX on the queuing phone call or calls. Thus, the switchboard operator can direct new calls to the free subscriptions. In another embodiment the switchboard operator has the possibility to discuss with the caller before placing the phone call in a queue, in which case the call can, if necessary, be connected to another extension. In an embodiment of the invention it is possible for the switchboard operator to pick up queuing phone calls and, if necessary, to connect them to new extensions.

If there is no answer from the mobile phone MP within a predetermined time, the call is re-directed back to the switchboard operator. Advantageously information on there being no answer at the selected extension is provided simultaneously. After this it is possible to connect the phone call again to the extension MP in question or to another extension MP, P. The mobile phone exchange MCX directs the phone call back to that phone exchange PBX where the phone call was connected from. The identifying of the phone exchange PBX takes place advantageously by means of an A-number.

In an embodiment of the invention the mobile phone exchange MCX identifies the A-number of a phone call, on the basis of which number the phone call coming from the phone exchange PBX can be identified as an exchange call. In an embodiment the phone call is processed as an exchange call if, in addition to the A-number that is characteristic of the exchange, there is another number, i.e. the number where the call has come from to the phone exchange PBX. In an embodiment when the mobile phone exchange MCX has identified the exchange call, it is determined whether transmission properties have been determined to be used with the mobile phone subscription to be connected.

In another embodiment the mobile phone exchange MCX identifies that transmission properties have been determined to be used with the mobile phone subscription (B-number) when the phone call comes from the phone exchange PBX. When a call comes to this type of a mobile phone subscription, the mobile phone exchange MCX determines whether the phone call has come from the phone exchange PBX. The determination advantageously takes place on the basis of the A-number.

In an embodiment of the invention, the identification of an exchange call is implemented on the basis of the B-number in the following manner: An individual extension number for each switchboard operator is created in the mobile phone exchange, to which extension number the call to be connected is first directed. On the basis of the B-number, the system identifies that it is an exchange call and implements the transmission operations normal for a phone call. Since in some cases it is possible that erroneous selections disturbing the operation could be directed to the B-numbers, it is advantageous to ensure the exchange call on the basis of the A-number as well.

So-called re-duplication is often used in practical system, in which case at least a part of the devices significant for the operation of the system are implemented by means of two (or even more) devices. Thus, when one device is damaged, a backup device can be connected to the system, after which the system is still operational. This kind of redundancy can also be applied in systems using the present invention.

It is obvious that the present invention is not limited solely to the above-presented embodiments but it can be modified within the scope of the appended claims.

## Claims

1. A method for transmitting phone calls from a phone exchange (PBX) to one or more extensions (P, MP), of which extensions at least one is a mobile phone subscription (MP), where the phone call signalled from the phone exchange is signalled to via a mobile phone exchange (MCX), **characterized in that** the phone call signalled from the phone exchange (PBX) is identified as an exchange call in the mobile phone exchange (MCX) on the basis of at least an A-number that is characteristic of the phone exchange (PBX), and the transmission properties of an exchange call are used for said phone call in the mobile phone exchange.

2. The method according to claim 1, **characterized in that** the phone call is identified on the basis of a B-number that is characteristic of the mobile phone subscription (MP).

3. The method according to claim 1 or 2, **characterized in that** when the mobile phone subscription (MP) is busy, the phone call identified as an exchange call is left queuing.

4. The method according to any of the preceding claims, **characterized in that** when there is no answer at the mobile phone subscription (MP), the call identified as an exchange call is returned to the phone exchange (PBX).

5. A phone system, which comprises at least a phone exchange (PBX), one or more extensions (P, MP) and a mobile phone exchange (MCX), which is arranged to signal the phone call coming from the phone exchange to the mobile phone subscription (MP), **characterized in that** the mobile phone exchange (MCX) comprises at least means for identifying the phone call coming from the phone exchange (PBX) as an exchange call on the basis of at least an A-number that is characteristic of the phone exchange (PBX), and means for creating transmission properties of an exchange call for said exchange call.

6. The phone system according to claim 5, **characterized in that** the mobile phone exchange (MCX) is arranged to identify an exchange call on the basis of a B-number that is characteristic of the mobile phone subscription (MP).

7. The phone system according to claim 5 or 6, **characterized in that** the mobile phone exchange (MCX) is arranged to keep the phone call from the phone exchange (PBX) in queue when the intended mobile phone subscription (MP) is busy.

8. The phone system according to claims 5 to 7, **characterized in that** the mobile phone exchange (MCX) is arranged to return the exchange call to the phone exchange (PBX) when the mobile phone (MP) is not reached or there is no answer.

9. A mobile phone exchange (MCX), which is intended to be used to signal a phone call coming from a phone exchange (PBX) to a mobile phone (MP), **characterized in that** the mobile phone exchange (MCX) comprises at least means for identifying the phone call coming from the phone exchange (PBX) as an exchange call on the basis of at least an A-number that is characteristic of the phone exchange (PBX), and means for creating transmission properties of an exchange call for said exchange call.

10. The mobile phone exchange (MCX) according to claim 9, **characterized in that** the mobile phone exchange (MCX) is arranged to identify an exchange call on the basis of a B-number that is characteristic of the mobile phone subscription (MP).

11. The mobile phone exchange according to claim 9 or 10, **characterized in that** the mobile phone exchange (MCX) is arranged to keep the phone call from the phone exchange (PBX) in queue when the intended mobile phone subscription (MP) is busy.

12. The mobile phone exchange (MCX) according to claims 9 to 11, **characterized in that** the mobile phone exchange (MCX) is arranged to return the exchange call to the phone exchange (PBX) when the mobile phone (MP) is not reached or there is no answer.

## Patentansprüche

1. Verfahren zum Übertragen von Telefonanrufen von einer Telefonvermittlungsanlage (PBX) zu einer oder mehreren Nebenstellen (P, MP), von welchen Nebenstellen mindestens eine ein Mobilfunkteilnehmer (MP) ist, wobei der von der Telefonvermittlungsanlage signalisierte Telefonanruf über eine Mobilfunkvermittlungsstelle (MCX) signalisiert wird, **dadurch gekennzeichnet, dass** der von der Telefonvermittlungsanlage (PBX) signalisierte Telefonanruf in der Mobilfunkvermittlungsstelle (MCX) als Vermittlungsanruf auf Basis von mindestens einer für die Telefonvermittlungsanlage (PBX) charakteristischen A-Nummer identifiziert wird und dass die Übertragungseigenschaften eines Vermittlungsanrufs für den Telefonanruf in der Mobilfunkvermittlungsstelle verwendet werden.

2. Verfahren nach Anspruch 1, **dadurch gekennzeichnet, dass** der Telefonanruf auf Basis einer für den Mobilfunkteilnehmer (MP) charakteristischen B-Nummer identifiziert wird.

3. Verfahren nach Anspruch 1 oder 2, **dadurch gekennzeichnet, dass,** wenn der Mobilfunkteilnehmer (MP) besetzt ist, der als Vermittlungsanruf identifizierte Telefonanruf in der Warteschlange gehalten wird.

4. Verfahren nach irgendeinem der vorangehenden Ansprüche, **dadurch gekennzeichnet, dass,** wenn keine Antwort beim Mobilfunkteilnehmer (MP) erfolgt, der als Vermittlungsanruf identifizierte Anruf zur Telefonvermittlungsanlage (PBX) umgeleitet wird.

5. Telefonanlage, welche mindestens eine Telefonvermittlungsanlage (PBX), eine oder mehrere Nebenstellen (P, MP) und eine Mobilfunkvermittlungsstelle (MCX) umfasst, welche derart angeordnet ist, dass sie den von der Telefonvermittlungsanlage kommenden Telefonanruf dem Mobilfunkteilnehmer (MP) signalisiert, **dadurch gekennzeichnet, dass** die Mobilfunkvermittlungsstelle (MCX) zumindest Mittel zum Identifizieren des von der Telefonvermittlungsanlage (PBX) kommenden Telefonanrufs als Vermittlungsanruf auf Basis von mindestens einer für die Telefonvermittlungsanlage (PBX) charakteristischen A-Nummer sowie Mittel zum Erzeugen von Übertragungseigenschaften eines Vermittlungsanrufs für den Vermittlungsanruf umfasst.

6. Telefonanlage nach Anspruch 5, **dadurch gekennzeichnet, dass** die Mobilfunkvermittlungsstelle (MCX) derart angeordnet ist, dass sie einen Vermittlungsanruf auf Basis einer für den Mobilfunkteilnehmer (MP) charakteristischen B-Nummer identifiziert.

7. Telefonanlage nach Anspruch 5 oder 6, **dadurch gekennzeichnet, dass** die Mobilfunkvermittlungsstelle (MCX) derart angeordnet ist, dass sie den Telefonanruf von der Telefonvermittlungsanlage (PBX) in der Warteschlange hält, wenn der vorgesehene Mobilfunkteilnehmer (MP) besetzt ist.

8. Telefonanlage nach Anspruch 5 bis 7, **dadurch gekennzeichnet, dass** die Mobilfunkvermittlungsstelle (MCX) derart angeordnet ist, dass sie den Vermittlungsanruf zur Telefonvermittlungsanlage (PBX) umleitet, wenn das Mobiltelefon (MP) nicht erreicht wird oder keine Antwort erfolgt.

9. Mobilfunkvermittlungsstelle (MCX), welche zur Signalisierung eines von einer Telefonvermittlungsanlage (PBX) kommenden Telefonanrufs an ein Mobiltelefon (MP) verwendet werden soll, **dadurch gekennzeichnet, dass** die Mobilfunkvermittlungsstelle (MCX) zumindest Mittel zum Identifizieren des von der Telefonvermittlungsanlage (PBX) kommenden Telefonanrufs als Vermittlungsanruf auf Basis von mindestens einer für die Telefonvermittlungsanlage (PBX) charakteristischen A-Nummer sowie Mittel zum Erzeugen von Übertragungseigenschaften eines Vermittlungsanrufs für den Vermittlungsanruf umfasst.

10. Mobilfunkvermittlungsstelle (MCX) nach Anspruch 9, **dadurch gekennzeichnet, dass** die Mobilfunkvermittlungsstelle (MCX) derart angeordnet ist, dass sie einen Vermittlungsanruf auf Basis einer für den Mobilfunkteilnehmer (MP) charakteristischen B-Nummer identifiziert.

11. Mobilfunkvermittlungsstelle nach Anspruch 9 oder 10, **dadurch gekennzeichnet, dass** die Mobilfunkvermittlungsstelle (MCX) derart angeordnet ist, dass sie den Telefonanruf von der Telefonvermittlungsanlage (PBX) in der Warteschlange hält, wenn der vorgesehene Mobilfunkteilnehmer (MP) besetzt ist.

12. Mobilfunkvermittlungsstelle (MCX) nach Anspruch 9 bis 11, **dadurch gekennzeichnet, dass** die Mobilfunkvermittlungsstelle (MCX) derart angeordnet ist, dass sie den Vermittlungsanruf zur Telefonvermittlungsanlage (PBX) umleitet, wenn das Mobiltelefon (MP) nicht erreicht wird oder keine Antwort erfolgt.

## Revendications

1. Procédé de transmission d'appels téléphoniques d'un central téléphonique (PBX) vers un ou plusieurs poste(s) (P, MP), parmi lesquels postes au moins un est un abonnement de téléphone mobile (MP), où l'appel téléphonique signalé du central téléphonique est signalé par l'intermédiaire d'un centre de commutation mobile (MCX), **caractérisé en ce que** l'appel téléphonique signalé du central téléphonique (PBX) est identifié comme un appel de central dans le centre de commutation mobile (MCX) sur la base d'au moins un nombre A qui est caractéristique du central téléphonique (PBX), et les propriétés de transmission d'un appel de central sont utilisées pour ledit appel téléphonique dans le centre de commutation mobile.

2. Procédé selon la revendication 1, **caractérisé en ce que** l'appel téléphonique est identifié sur la base d'un nombre B qui est caractéristique de l'abonnement de téléphone mobile (MP).

3. Procédé selon la revendication 1 ou 2, **caractérisé en ce que** lorsque l'abonnement de téléphone mobile (MP) est occupé, l'appel téléphonique identifié comme un appel de central est laissé en file d'attente.

4. Procédé selon l'une quelconque des revendications précédentes, **caractérisé en ce que** lorsqu'il n'y a pas de réponse au niveau de l'abonnement de téléphone mobile (MP), l'appel téléphonique identifié comme un appel de central est retourné au central téléphonique (PBX).

5. Système téléphonique, qui comprend au moins un central téléphonique (PBX), un ou plusieurs poste(s) (P, MP) et un centre de commutation mobile (MCX), qui est agencé de façon à signaler l'appel téléphonique provenant du central téléphonique à l'abonnement de téléphone mobile (MP), **caractérisé en ce que** le centre de commutation mobile (MCX) comprend au moins un moyen pour identifier l'appel téléphonique provenant du central téléphonique (PBX) comme un appel de central sur la base d'au moins un nombre A qui est caractéristique du central téléphonique (PBX), et un moyen pour créer des propriétés de transmission d'un appel de central pour ledit appel de central.

6. Système téléphonique selon la revendication 5, **caractérisé en ce que** le centre de commutation mobile (MCX) est agencé de façon à identifier un appel de central sur la base d'un nombre B qui est caractéristique de l'abonnement de téléphone mobile (MP).

7. Système téléphonique selon la revendication 5 ou 6, **caractérisé en ce que** le centre de commutation mobile (MCX) est agencé de façon à conserver l'appel téléphonique provenant du central téléphonique (PBX) en file d'attente lorsque l'abonnement de téléphone mobile (MP) visé est occupé.

8. Système téléphonique selon les revendications 5 à 7, **caractérisé en ce que** le centre de commutation mobile (MCX) est agencé de façon à retourner l'appel téléphonique au central téléphonique (PBX) lorsque le téléphone mobile (MP) n'est pas atteint ou qu'il n'y a pas de réponse.

9. Centre de commutation mobile (MCX), qui est destiné à être utilisé pour signaler un appel téléphonique provenant d'un central téléphonique (PBX) à un téléphone mobile (MP), **caractérisé en ce que** le centre de commutation mobile (MCX) comprend au moins un moyen pour identifier l'appel téléphonique provenant du central téléphonique (PBX) comme un appel de central sur la base d'au moins un nombre A qui est caractéristique du central téléphonique (PBX), et un moyen pour créer des propriétés de transmission d'un appel de central pour ledit appel de central.

10. Centre de commutation mobile (MCX) selon la revendication 9, **caractérisé en ce que** le centre de commutation mobile (MCX) est agencé de façon à identifier un appel de central sur la base d'un nombre B qui est caractéristique de l'abonnement de téléphone mobile (MP).

11. Centre de commutation mobile selon la revendication 9 ou 10, **caractérisé en ce que** le centre de commutation mobile (MCX) est agencé de façon à conserver l'appel téléphonique provenant du central téléphonique (PBX) en file d'attente lorsque l'abonnement de téléphone mobile (MP) visé est occupé.

12. Centre de commutation mobile (MCX) selon les revendications 9 à 11, **caractérisé en ce que** le centre de commutation mobile (MCX) est agencé de façon à retourner l'appel téléphonique au central téléphonique (PBX) lorsque le téléphone mobile (MP) n'est pas atteint ou qu'il n'y a pas de réponse.
